# EUROPEAN PATENT APPLICATION

(11) **EP 2 034 607 A1**
(43) Date of publication of application: **11.03.2009**
(21) Application number: 07744542.7
(22) Date of filing: 25.05.2007
(51) Int. Cl.: H02P 27/06, B60K 6/445, B60L 11/18, B60W 10/08, B60W 10/26, B60W 20/00

(54) **MOTORIZED VEHICLE**

(30) Priority: 23.06.2006 JP 2006174120
(71) Applicant: Toyota Jidosha Kabushiki Kaisha, Toyota-shi, Aichi 471-8571 (JP)
(72) Inventor: KUNO, Hiromichi, Toyota-shi, Aichi 471-8571 (JP)
(74) Representative: TBK-Patent
(86) International application number: PCT/JP2007/061154
(87) International publication number: WO 2007/148521

(57) **Abstract**

In a charge/discharge mode, an inverter (10, 20) performs power conversion between a power storage device (B) and a commercial power supply (92) electrically connected to a neutral point (N1, N2) through a power line (ACL1, ACL2). In the charge/discharge mode, ECU (30) sets a carrier frequency of the inverter (10, 20) to a frequency higher than in a running mode. Further, in the charge/discharge mode, a drive circuit (40) drives the inverter (10, 20) using a gate resistance higher than in the running mode.

## Description

### Technical Field

The present invention relates to an electrically powered vehicle and, more specifically, to an electrically powered vehicle allowing electric power supply and reception between a power storage device and a power source or an electric load outside the vehicle.

### Background Art

Japanese Patent Laying-Open No. 4-295202 discloses a motor drive apparatus capable of supplying and receiving electric power between an AC power supply outside a vehicle and a DC power supply provided in the vehicle. The motor drive apparatus includes a battery, inverters IA and IB, induction motors MA and MB, and a control unit. Induction motors MA and MB include Y-connected windings CA and CB, respectively. To neutral points NA and NB of windings CA and CB, an input/output port is connected through an EMI filter. Inverters IA and IB are provided corresponding to induction motors MA and MB, respectively, and connected to windings CA and CB, respectively. Inverters IA and IB are connected parallel to the battery.

In the motor drive apparatus, in a recharge mode, an AC electric power applied from a single-phase power supply connected to the input/output port to neutral points NA and NB of windings CA and CB can be converted to a DC electric power to charge the battery. Further, it is possible to generate an AC electric power having sinusoidal adjusted wave across neutral points NA and NB, and to output the generated AC electric power to an external device connected to the input/output port.

On/off operations of a switching element included in the inverter generate electromagnetic noise in the inverter. Here, the electromagnetic noise from the inverter would be lost among other noises (such as the sound of running) while the vehicle is moving and, therefore, it does not typically pose a significant problem.

If electric power supply and reception between the power source or electric load outside the vehicle and the power storage device mounted on the vehicle is possible using an inverter for driving the motor as in the motor drive apparatus disclosed in the laid-open application described above, it would be the case that such electric power supply and reception takes place while the vehicle is stopped and, particularly, charging of the power storage device is performed at night, when the vehicle is not used. During electric power supply and reception as such, electromagnetic noise from the inverter possibly poses a significant problem. The laid-open application above is silent about such a problem.

Further, if electric power is supplied and received between the power source or electric load outside the vehicle and the power storage device mounted on the vehicle using an inverter for driving a motor, a surge voltage generated in response to the on/off operation of a switching element included in the inverter may affect the external power source or external load. The motor drive apparatus disclosed in the laid-open application has an EMI filter, resulting in cost increase.

### Disclosure of the Invention

The present invention was made to solve the above-described problems and its object is to provide an electrically powered vehicle considering the noise generated by the inverter while power is supplied and received between the power source or electric load outside the vehicle and the power storage device mounted on the vehicle.

The present invention provides an electrically powered vehicle including a rotating electric machine, an inverter device, a power storage device and a controller. The inverter device is capable of driving the rotating electric machine. The power storage device supplies and receives electric power to/from the inverter device. The controller controls the inverter device either in a first operation mode (running mode) in which the rotating electric machine is driven to rotate, or in a second operation mode (charge/discharge mode) in which the inverter device is operated as a voltage converter supplying and receiving electric power between the power storage device and a power supply or an electric load outside the vehicle. In the second operation mode, the controller reduces prescribed noise generated from the inverter device than in the first operation mode, by changing either switching frequency or switching speed of a switching element included in the inverter device from that in the first operation mode.

Preferably, the prescribed noise is sound noise. In the second operation mode, the controller changes the carrier frequency in a direction closer to inaudible range than in the first operation mode.

More preferably, the controller sets the carrier frequency to a first frequency in the first operation mode, and sets the carrier frequency to a second frequency higher than the first frequency in the second operation mode.

More preferably, the second frequency is in the inaudible range.

Preferably, in the second operation mode, the controller changes the carrier frequency only in a preset late night hours.

Preferably, the electrically powered vehicle further includes a noise sensor. The noise sensor detects noise level around the vehicle. In the second operation mode, the controller changes the carrier frequency only when the noise level detected by the noise sensor is lower than a reference value.

Preferably, the electrically powered vehicle further includes an instruction input unit. The instruction input unit allows a user to input instruction to inhibit change of the carrier frequency. The controller stops change of the carrier frequency when the change of the carrier frequency is inhibited by the instruction input unit.

Preferably, the prescribed noise is noise to the power supply or to the electric load outside the vehicle, caused by surge voltage generated with an on/off operation of the switching element included in the inverter device. In the second operation mode, the controller lowers switching speed of the switching element than in the first operation mode.

More preferably, the electrically powered vehicle further includes a drive circuit. The drive circuit drives the switching element in accordance with an instruction applied from the controller. The drive circuit includes first and second gate resistances. The first gate resistance is used in the first operation mode. The second gate resistance is used in the second operation mode, and has a resistance value larger than the first gate resistance.

Preferably, the rotating electric machine includes a star-connected first poly-phase winding as a stator winding. The electrically powered vehicle further includes another rotating electric machine and a connecting device. The said another rotating electric machine includes a star-connected second poly-phase winding as a stator winding. The connecting device is configured to allow electric power supply and reception between a first neutral point of the first poly-phase winding, a second neutral point of the second poly-phase winding and the power supply or the electric load outside the vehicle. The inverter device includes first and second inverters. The first inverter is capable of driving the rotating electric machine. The second inverter is capable of driving said another rotating electric machine. The controller controls the first and second inverters such that in the second operation mode, electric power is supplied and received between the power storage device and the power supply or the electric load outside the vehicle, connected to the first and second neutral points by the connecting device.

More preferably, when the power storage device is charged from the power supply outside the vehicle in the second operation mode, the controller boosts a voltage supplied from the power supply by using the first and second poly-phase windings as reactors and controlling the first and second inverters such that the first and second inverters operate as legs of the voltage converter.

In the present invention, the inverter device operates either in the first operation mode (running mode) in which the rotating electric machine is driven to rotate, or the second operation mode (charge/discharge mode) in which the inverter device is operated as a voltage converter for supplying and receiving electric power between the power source or power load outside the vehicle and the power storage device. In the second operation mode, the controller changes either the switching frequency or switching speed of the switching element included in the inverter device from that in the first operation mode, so that the prescribed noise generated from the inverter device is reduced. Therefore, the prescribe noise generated from the inverter device can be reduced when electric power is supplied and received between the power supply or power load outside the vehicle and the power storage device.

Therefore, by the present invention, it is possible to reduce the electromagnetic noise or influence of surge voltage on the power supply or electric load when electric power is supplied and received between the power supply or power load outside the vehicle and the power storage device.

### Brief Description of the Drawings

Fig. 1 is an overall block diagram of a hybrid vehicle shown as an example of the electrically powered vehicle in accordance with Embodiment 1 of the present invention.
Fig. 2 is a functional block diagram of ECU shown in Fig. 1.
Fig. 3 is a zero-phase equivalent circuit diagram of the inverter and motor generator shown in Fig. 1.
Fig. 4 is a flowchart of carrier frequency setting by the carrier signal generating unit shown in Fig. 2.
Fig. 5 is a flowchart of carrier frequency setting in accordance with Modification 1 of Embodiment 1.
Fig. 6 is an overall block diagram of a hybrid vehicle in accordance with Modification 2 of Embodiment 1.
Fig. 7 is a flowchart of carrier frequency setting in accordance with Modification 2 of Embodiment 1.
Fig. 8 is an overall block diagram of a hybrid vehicle in accordance with Modification 3 of Embodiment 1.
Fig. 9 is a flowchart of carrier frequency setting in accordance with Modification 3 of Embodiment 1.
Fig. 10 is a circuit diagram of a drive circuit in accordance with Embodiment 2.
Fig. 11 is an overall block diagram of an electrically powered vehicle in accordance with Embodiment 3.

### Best Modes for Carrying Out the Invention

In the following, embodiments of the present invention will be described in detail with reference to the figures. Throughout the figures, the same or corresponding portions are denoted by the same reference characters and description thereof will not be repeated.

### [Embodiment 1]

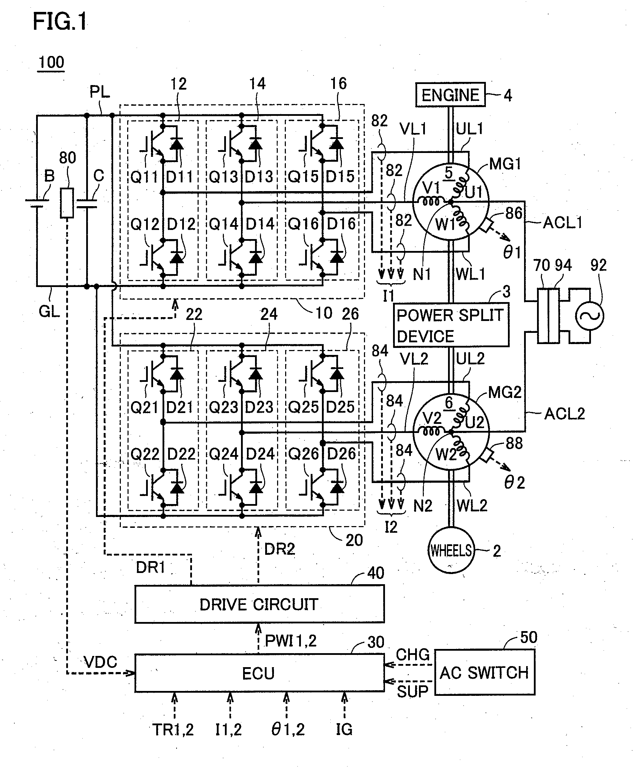

Fig. 1 is an overall block diagram of the hybrid vehicle shown as an example of the electrically powered vehicle in accordance with the present invention. Referring to Fig. 1, a hybrid vehicle 100 includes an engine 4, motor generators MG1 and MG2, a power split device 3, and wheels 2. Hybrid vehicle 100 further includes a power storage device B, inverters 10 and 20, an ECU (Electronic Control Unit) 30, a drive circuit 40 and an AC switch 50.

Hybrid vehicle 100 further includes a power line PL, a ground line GL, a capacitor C, U-phase lines UL1 and UL2, V-phase lines VL1 and VL2, W-phase lines WL1 and WL2, a voltage sensor 80, current sensors 82 and 84, and rotation angle sensors 86 and 88. Further, hybrid vehicle 100 includes power lines ACL1 and ACL2 and a connector 70.

Hybrid vehicle 100 runs using engine 4 and motor generator MG2 as power sources. Power split device 3 is coupled to engine 4 and to motor generators MG1 and MG2, and distributes power among these. By way of example, a planetary gear mechanism having three rotation shafts of a sun gear, a planetary carrier and a ring gear may be used as the power split device 3. These three shafts of rotation are respectively connected to respective rotation shafts of engine 4 and motor generators MG1 and MG2. For instance, it is possible to mechanically connect engine 4 and motor generators MG1 and MG2 to power split device 3 by making the rotor of motor generator MG1 hollow and passing a crankshaft of engine 4 through the center thereof.

Rotation shaft of motor generator MG2 is coupled to wheel 2 by a reduction gear or a differential gear, not shown. Further, a reduction mechanism for the rotation shaft of motor generator MG2 may further be incorporated inside the power split device 3.

Motor generator MG1 is incorporated in the hybrid vehicle 100, operating as a generator driven by the engine 4 and as a motor that can start the operation of engine 4. Motor generator MG2 is incorporated in the hybrid vehicle 100 as a motor driving wheel 2.

As will be described in detail later, hybrid vehicle 100 allows electric power supply and reception to and from commercial power supply 92 connected by connector 94 to connector 70.

Positive electrode and negative electrode of power storage device B are connected to power line PL and ground line GL, respectively. Capacitor C is connected between power line PL and ground line GL. Inverter 10 includes a U-phase arm 12, a V-phase arm 14 and a W-phase arm 16. U-phase arm 12, V-phase arm 14 and W-phase arm 16 are connected in parallel between power line PL and ground line GL. U-phase arm 12 includes series-connected power transistors Q11 and Q12, V-phase arm 14 includes series-connected power transistors Q13 and Q14, and W-phase arm 16 includes series-connected power transistors Q15 and Q16. To power transistors Q11 to Q16, diodes D11 to D16 are connected in anti-parallel.

As the above-described power transistors, an IGBT (Insulated Gate Bipolar Transistor) may be used. Further, in place of the power transistor, a power switching element such as a power MOSFET (Metal Oxide Semiconductor Field-Effect Transistor) may be used.

Motor generator MG 1 includes a three-phase coil 5 as a stator coil. U-phase coil U1, V-phase coil V1 and W-phase coil W1 forming the three-phase coil 5 have one end connected together to form a neutral point N1, and U-phase coil U1, V-phase coil V1 and W-phase coil W1 have the other end connected to nodes between upper and lower arms of U-phase arm 12, V-phase arm 14 and W-phase arm 16 of inverter 10, respectively.

Inverter 20 includes a U-phase arm 22, a V-phase arm 24 and a W-phase arm 26. Motor generator MG2 includes a three-phase coil 6 as a stator coil. Inverter 20 and motor generator MG2 have the same structures as inverter 10 and motor generator MG1, respectively.

To the neutral point N1 of three-phase coil 5, one end of power line ACL1 is connected, and the other end of power line ACL1 connected to connector 70. To the neutral point N2 of three-phase coil 6, one end of power line ACL2 is connected, and the other end of power line ACL2 is connected to connector 70.

Power storage device B is a rechargeable DC power source, such as a nickel hydride or lithium ion secondary battery. Power storage device B supplies electric power to inverter 10/20, and charged by inverter 10 and/or 20. It is noted that a large capacity capacitor may be used as power storage device B.

Capacitor C smoothes voltage fluctuation between power line PL and ground line GL. Voltage sensor 80 detects voltage between terminals of capacitor C, that is, voltage VDC of power line PL to ground line GL, and outputs the detected voltage VDC to ECU 30.

In accordance with a drive signal DR1 from drive circuit 40, inverter 10 converts the DC voltage received from power storage device B to a three-phase AC voltage, and outputs the converted three-phase AC voltage to motor generator MG1. Further, in accordance with the drive signal DR1 from drive circuit 40, inverter 10 converts the three-phase AC voltage generated by motor generator MG1 receiving power from engine 4 to a DC voltage, and outputs the converted DC voltage to power line PL.

In accordance with a drive signal DR2 from drive circuit 40, inverter 20 converts the DC voltage from power storage device B to three-phase AC voltage, and outputs the converted three-phase AC voltage to motor generator MG2. Further, in regenerative braking of the vehicle, inverter 20 converts the three-phase AC voltage generated by motor generator MG2 receiving the rotational force from wheels 2 to a DC voltage in accordance with the drive signal DR2 from drive circuit 40, and outputs the converted DC voltage to power line PL.

Here, when AC power is applied from commercial power supply 92 connected to connector 70 by connector 94 through power lines ACL1 and ACL2 to neutral points N1 and N2, inverters 10 and 20 convert the AC power input from neutral points N1 and N2 to DC power and output the power to power line PL, to charge power storage device B. When power supply from power storage device B to commercial power supply 92 connected to connector 70 by connector 94 is requested, inverters 10 and 20 generate commercial AC voltage across neutral points N1 and N2, and the electric power is output from neutral points N1, N2 through power lines ACL1 and ACL2 to commercial power supply 92.

Each of motor generators MG1 and MG2 is a three-phase AC rotating electric machine, implemented, for example, by three-phase AC synchronous motor generator. Motor generator MG 1 is driven for regeneration by inverter 10, and outputs three-phase AC voltage generated using the power of engine 4 to inverter 10. Further, motor generator MG1 is driven for power running by inverter 10 at the start of engine 4, attaining cranking of engine 4. Motor generator MG2 is driven for power running by inverter 20, and generates power for driving wheel 2. Further, at the time of regenerative braking of the vehicle, motor generator MG2 is driven for regeneration by inverter 20, and outputs three-phase AC voltage generated by using rotational power received from wheel 2 to inverter 20.

Current sensor 82 detects motor current I1 flowing through coils of respective phases of motor generator MG1, and outputs it to ECU 30. Rotation angle sensor 86 detects a rotation angle θ1 of a rotor of motor generator MG1 and outputs it to ECU 30. Current sensor 84 detects motor current I2 flowing through coils of respective phases of motor generator MG2, and outputs it to ECU 30. Rotation angle sensor 88 detects a rotation angle θ2 of a rotor of motor generator MG2 and outputs it to ECU 30.

ECU 30 generates signals PWI1 and PWI2 for controlling inverters 10 and 20, respectively, and outputs the generated signals PWI1 and PWI2 to drive circuit 40.

When connector 94 of commercial power supply 92 is connected to connector 70 and charging of power storage device B from commercial power supply 92 is requested based on a charge request signal CHG from an AC switch 50, ECU 30 controls inverters 10 and 20 such that the AC power applied from commercial power supply 92 to neutral points N1 and N2 is converted to DC power for charging power storage device B.

More specifically, ECU 30 uses three-phase coils 5 and 6 of motor generators MG1 and MG2 as reactors, and controls inverters 10 and 20 such that the inverters 10 and 20 operate as legs of a single-phase converter converting the AC power from commercial power supply 92 input through neutral points N1 and N2 to a DC power, whereby the voltage supplied from commercial power supply 92 is boosted.

When connector 94 of commercial power supply 92 is connected to connector 70 and power supply from power storage device B to commercial power supply 92 is requested based on a power supply request signal SUP from AC switch 50, ECU 30 controls inverters 10 and 20 such that the DC power from power storage device B is converted to AC power and output from neutral points N1 and N2 to commercial power supply 92.

More specifically, ECU 30 controls inverters 10 and 20 such that inverters 10 and 20 operate as legs of a single-phase inverter converting the DC power from power storage device B to AC power to be output from neutral points N1 and N2.

Drive circuit 40 receives signals PWI1 and PWI2 from ECU 30. Then, drive circuit 40 generates drive signal DR1 for actually turning on/off the power transistors Q11 to Q16 of inverter 10 based on the signal PWI1, and outputs the generated drive signal DR1 to gate electrodes of power transistors Q11 to Q16. Further, drive circuit 40 generates drive signal DR2 for actually turning on/off the power transistors Q21 to Q26 of inverter 20 based on the signal PWI2, and outputs the generated drive signal DR2 to gate electrodes of power transistors Q21 to Q26.

AC switch 50 is an input device allowing the user to instruct charging of power storage device B from commercial power supply 92 or power supply from power storage device B to commercial power supply 92. When charging of power storage device B from commercial power supply 92 is instructed, AC switch 50 activates a charge request signal CHG to be output to ECU 30. When power supply from power storage device B to commercial power supply 92 is instructed, AC switch 50 activates a supply request signal SUP to be output to ECU 30. AC switch 50 is implemented by a touch panel, a push button or the like.

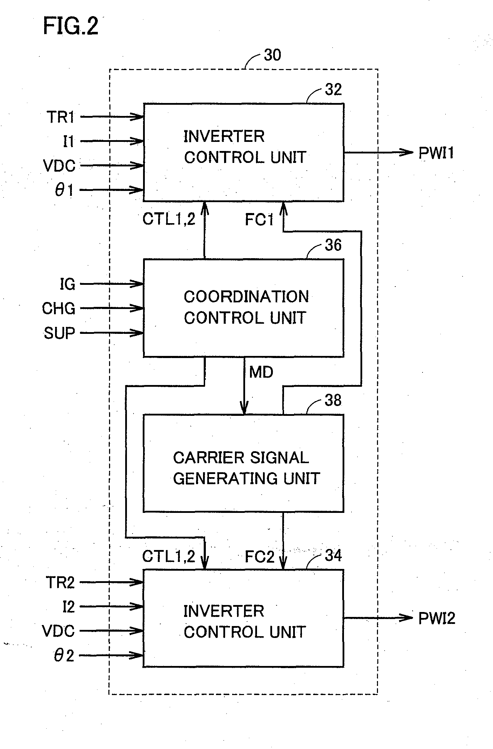

Fig. 2 is a functional block diagram of ECU 30 shown in Fig. 1. Referring to Fig. 2, ECU 30 includes inverter control units 32 and 34, a coordination control unit 36, and a carrier signal generating unit 38.

Inverter control unit 32 generates a PWM (Pulse Width Modulation) signal for turning on/off power transistors Q11 to Q16 of inverter 10, based on a torque command TR1, motor current I1 and rotation angle θ1 of motor generator MG1, voltage VDC from voltage sensor 80 and a carrier signal FC1 from carrier signal generating unit 38, and outputs the generated PWM signal as the signal PWI1 to drive circuit 40.

Inverter control unit 34 generates a PWM signal for turning on/off power transistors Q21 to Q26 of inverter 20, based on a torque command TR2, motor current I2 and rotation angle θ2 of motor generator MG2, voltage VDC and a carrier signal FC2 from carrier signal generating unit 38, and outputs the generated PWM signal as the signal PWI2 to drive circuit 40.

Inverter control units 32 and 34 generate the signals PWI1 and PWI2 such that when the control signal CTL1 from coordination control unit 36 is activated, the AC power applied from commercial power supply 92 to neutral points N1 and N2 is converted to DC power with which the power storage device B is charged, and output the generated signals PWM1 and PWM2 to drive circuit 40.

Further, inverter control circuits 32 and 34 generate the signals PWI1 and PWI2 such that when the control signal CTL2 from coordination control unit 36 is activated, commercial AC voltage to be output to commercial power supply 92 is generated across neutral points N1 and N2, and output the generated signals PWM1 and PWM2 to drive circuit 40.

When an ignition signal IG is inactive and the charge request signal CHG from AC switch 50 is active, coordination control unit 36 activates the control signal CTL1 to be output to inverter control units 32 and 34. Further, when the ignition signal IG is inactive and the supply request signal SUP from AC switch 50 is active, coordination control unit 36 activates the signal CTL2 to be output to inverter control units 32 and 34. The ignition signal IG changes dependent on the position of ignition key, and the inactivated ignition signal IG indicates that the ignition key is at an off position.

Further, when the charge request signal CHG or supply request signal SUP is activated while the ignition signal IG is inactive, coordination control signal 36 activates a mode signal MD to be output to carrier signal generating unit 38. Specifically, the mode signal MD represents the operation mode of inverters 10 and 20. The inactive mode signal MD represents that the operation is in the running mode (normal mode), and the active mode signal MD represents that the operation is in the charge/discharge mode (a state in which electric power supply and reception is possible between power storage device B and commercial power supply 92).

When the mode signal MD from coordination control unit 36 is inactive, carrier signal generating unit 38 sets carrier frequencies of carrier signals FC1 and FC2 to frequencies fd1 and fd2 for the running mode, respectively. Further, when the mode signal MD from coordination control unit 36 is active, carrier signal generating unit 38 sets carrier frequencies of each of carrier signals FC 1 and FC2 to frequency fc for the charge/discharge mode.

Then, carrier signal generating unit 38 generates carrier signals FC1 and FC2 having the set carrier frequencies, and outputs the generated carrier signals FC1 and FC2 to inverter control units 32 and 34, respectively.

Carrier frequencies fd1 and fd2 for the running mode are determined in consideration of switching loss of power transistors Q11 to Q16 and Q21 to Q26, and generally, they are in an audible range (for example, a few to 10 kHz). Carrier frequency fc for the charge/discharge mode is set to be higher than carrier frequencies fd1 and fd2 for the running mode, in order to reduce electromagnetic noise of inverters 10 and 20. By way of example, carrier frequency fc is set to a value higher than 15 kHz and, preferably, in an inaudible range (20 kHz or higher).

When the carrier frequency is increased, switching loss of a transistor also increases. In the charge/discharge mode, however, the current flowing to inverters 10 and 20 is an order of magnitude smaller than when in the running mode. Therefore, increase in switching loss poses no problem.

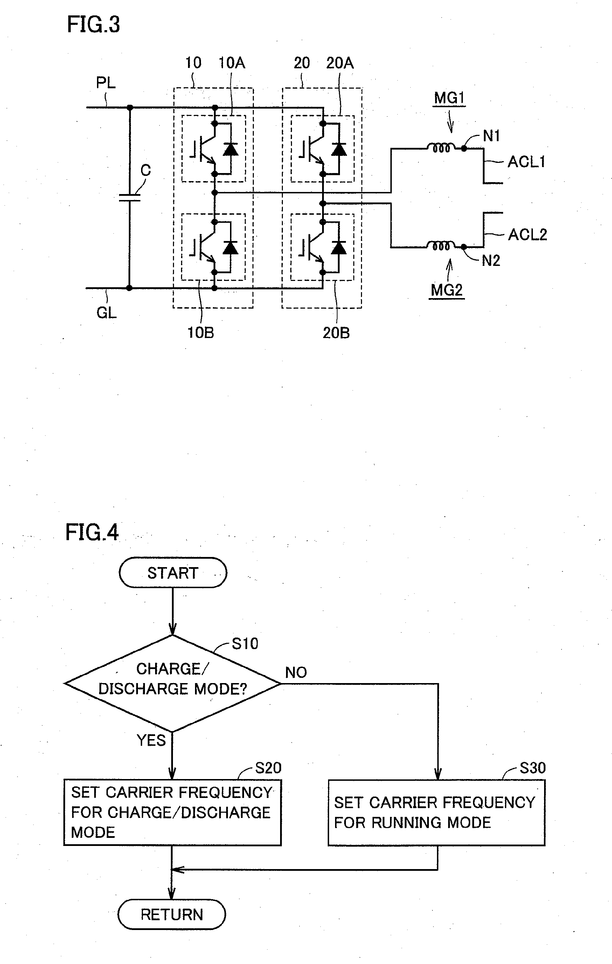

Fig. 3 is a zero-phase equivalent circuit of inverters 10 and 20 and motor generators MG1 and MG2 shown in Fig. 1. In each of inverters 10 and 20 as three-phase inverters, there are eight different patterns for combining on/off of six transistors. Among the eight switching patterns, two have zero interphase voltage, and such voltage state is referred to as zero voltage vector. For the zero voltage vector, three transistors of the upper arm can be regarded as in the same switching state (all on or all off), and three transistors of the lower arm can also be regarded as in the same switching state. Therefore, in Fig. 3, three transistors of the upper arm of inverter 10 are collectively represented as upper arm 10A, and three transistors of the lower arm of inverter 10 are collectively represented as lower arm 10B. Similarly, three transistors of the upper arm of inverter 20 are collectively represented as upper arm 20A, and three transistors of the lower arm of inverter 20 are collectively represented as lower arm 20B.

As shown in Fig. 3, the zero-phase equivalent circuit may also be regarded as a single-phase PWM converter that receives as an input single-phase AC commercial power applied to neutral points N1 and N2 through power lines ACL1 and ACL2. Further, the zero-phase equivalent circuit may be regarded as a single-phase PWM inverter that generates a single-phase AC voltage across neutral points N1 and N2 using the DC voltage supplied from power line PL. Therefore, by changing zero voltage vector in each of inverters 10 and 20 and thereby switching control of inverters 10 and 20 such that the inverters operate as arms (legs) of respective phases of single-phase PWM converter of single-phase PWM inverter, it is possible to convert AC commercial voltage input from connector 70 to DC voltage and to output it to power line PL, and it is possible to convert the DC voltage from power line PL to AC voltage and to output it through connector 70.

Fig. 4 is a flowchart for setting the carrier frequency by carrier signal generating unit 38 shown in Fig. 2. Referring to Fig. 4, carrier signal generating unit 38 determines, based on the mode signal MD from coordination control unit 36, whether the operation mode of inverters 10 and 20 is the charge/discharge mode or not (step S10).

If the operation mode is determined to be the charge/discharge mode (YES at step S10), carrier signal generating unit 38 sets the carrier frequency of each of carrier signals FC1 and FC2 to the frequency fc for the charge/discharge mode (step S20).

If the operation mode is determined not to be the charge/discharge mode at step S10 (NO at step S10), carrier signal generating unit 38 sets the carrier frequencies of carrier signals FC1 and FC2 to frequencies fd1 and fd2 for the running mode, respectively (step S30).

### [Modification 1 of Embodiment 1]

In Modification 1, the carrier frequency fc for the charge/discharge mode is set only in late night hours when the noise is particularly bothering.

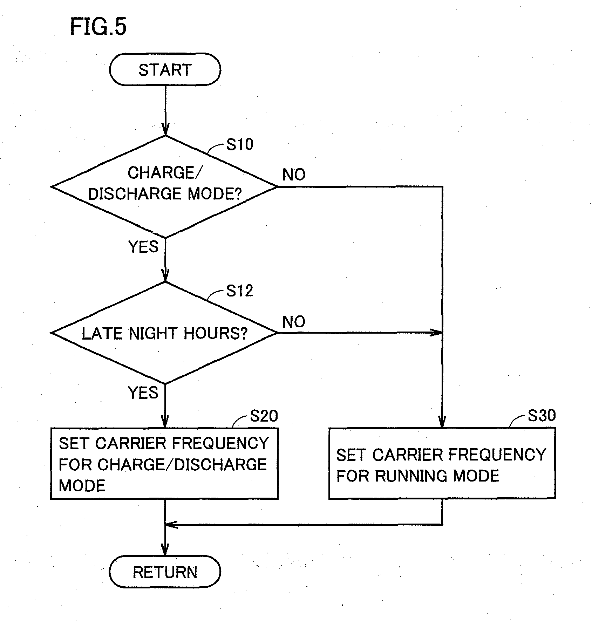

Fig. 5 is a flowchart for setting the carrier frequency in accordance with Modification 1 of Embodiment 1. Referring to Fig. 5, the flowchart includes, in addition to the flowchart of Fig. 4, a step S12. Specifically, if it is determined at step S10 that the operation is in the charge/discharge mode, carrier signal generating unit 38 determines whether it is in a preset late night hours (for example, 22:00 to 6:00) or not (step S12).

If the time is determined to be in the late night hours (YES at step S12), control proceeds to step S20 at which carrier signal generating unit 38 sets the carrier frequency of each of carrier signals FC1 and FC2 to the frequency fc for the charge/discharge mode.

If it is determined at step S12 that the time is not in the late night hours (NO at step S12), control proceeds to step S30 at which carrier signal generating unit 38 sets the carrier frequencies of carrier signals FC1 and FC2 to frequencies fd1 and fd2 for the running mode, respectively.

### [Modification 2 of Embodiment 1]

In Modification 2, noise around the vehicle is detected and the carrier frequency fc for the charge/discharge mode is set only when noise around the vehicle is low.

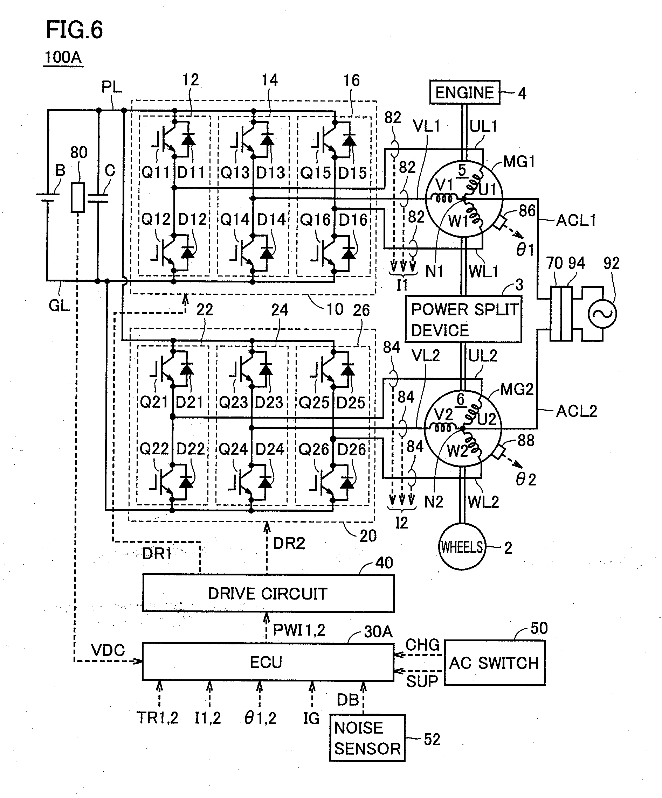

Fig. 6 is an overall block diagram of a hybrid vehicle in accordance with Modification 2 of Embodiment 1. Referring to Fig. 6, hybrid vehicle 100A includes, in addition to the configuration of hybrid vehicle 100 shown in Fig. 1, a noise sensor 52, and includes, in place of ECU 30, an ECU 30A.

Noise sensor 52 detects noise level around hybrid vehicle 100A, and outputs a signal DB that changes in accordance with the detected noise level, to ECU 30A.

ECU 30A determines the operation mode (running mode, charge/discharge mode) of inverters 10 and 20 based on the ignition signal IG and the charge request signal CHG and supply request signal SUP from AC switch 50, and based on the determined operation mode and the signal DB from noise sensor 52, determines carrier frequency of the carrier signal for generating signals PWI1 and PWI2, in the manner as will be described in the following.

Other functions of ECU 30A are the same as those of ECU 30 in accordance with Embodiment 1. Further, other configurations of hybrid vehicle 100A are the same as those of hybrid vehicle 100 in accordance with Embodiment 1.

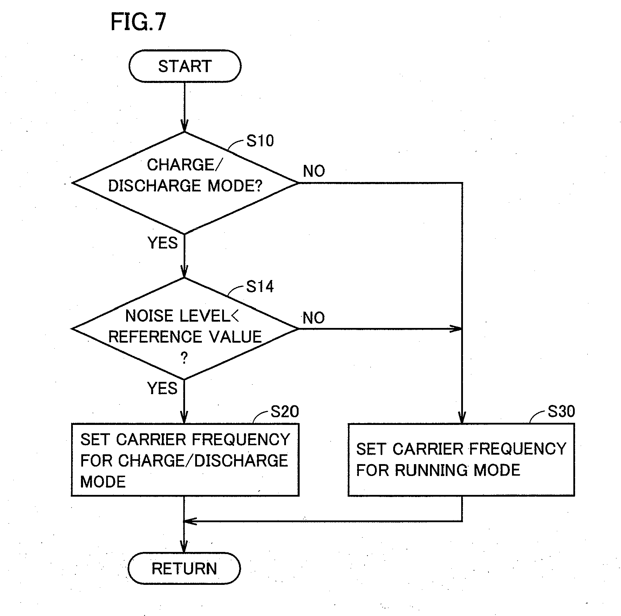

Fig. 7 is a flowchart for setting the carrier frequency in accordance with Modification 2 of Embodiment 1. Referring to Fig. 7, the flowchart includes, in addition to the flowchart of Fig. 4, a step S 14. Specifically, if it is determined at step S10 that the operation is in the charge/discharge mode, carrier signal generating unit 38 determines whether the noise around the vehicle is lower than a preset reference value or not, based on the signal DB from noise sensor 52 (step S 14).

If the noise level around the vehicle is determined to be lower than the reference value (YES at step S 14), control proceeds to step S20 at which carrier signal generating unit 38 sets the carrier frequency of each of carrier signals FC1 and FC2 to the frequency fc for the charge/discharge mode.

If it is determined at step S 14 that the noise level around the vehicle is not lower than the reference value (NO at step S14), control proceeds to step S30 at which carrier signal generating unit 38 sets the carrier frequencies of carrier signals FC1 and FC2 to frequencies fd1 and fd2 for the running mode, respectively.

### [Modification 3 of Embodiment 1]

Modification 3 allows the user to select whether the carrier frequency is to be switched from the frequency for the running mode to the frequency for the charge/discharge mode, in the charge/discharge mode.

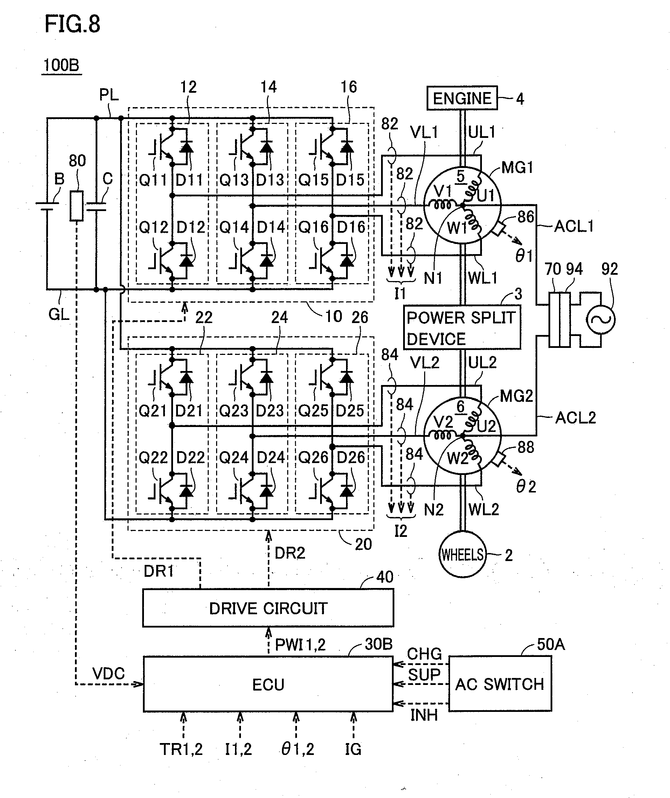

Fig. 8 is an overall block diagram of a hybrid vehicle in accordance with Modification 3 of Embodiment 1. Referring to Fig. 8, a hybrid vehicle 100B includes, in the configuration of hybrid vehicle 100 shown in Fig. 1, an AC switch 50A and an ECU 30B, in place of AC switch 50 and ECU 30, respectively.

In the charge/discharge mode, when the user makes an instruction to inhibit switching of carrier frequency of inverters 10 and 20 from the frequencies fd1 and fd2 for the running mode to the frequency fc for the charge/discharge mode, AC switch 50A outputs a signal INH of H (logic high) level to ECU 30B.

Other functions of AC switch 50A are the same as those of AC switch 50 in accordance with Embodiment 1.

ECU 30B determines the operation mode (running mode, charge/discharge mode) of the vehicle based on the ignition signal IG and the charge request signal CHG and power supply request signal SUP from AC switch 50A, and based on the determined operation mode, determines the carrier frequency of the carrier signal for generating signals PWI1 and PWI2.

Here, as long as the signal INH from AC switch 50A is at the H level, ECU 30B sets the carrier frequencies of inverters 10 and 20 to fd1 and fd2 for the running mode, even if the operation mode of inverters 10 and 20 is the charge/discharge mode. In other words, while the signal INH is at the H level, ECU 30B inhibits switching of carrier frequencies from frequencies fd1 and fd2 for the running mode to the frequency fc for the charge/discharge mode.

Other functions of ECU 30B are the same as those of ECU 30 in accordance with Embodiment 1. Further, other configurations of hybrid vehicle 100B are the same as those of hybrid vehicle 100 in accordance with Embodiment 1.

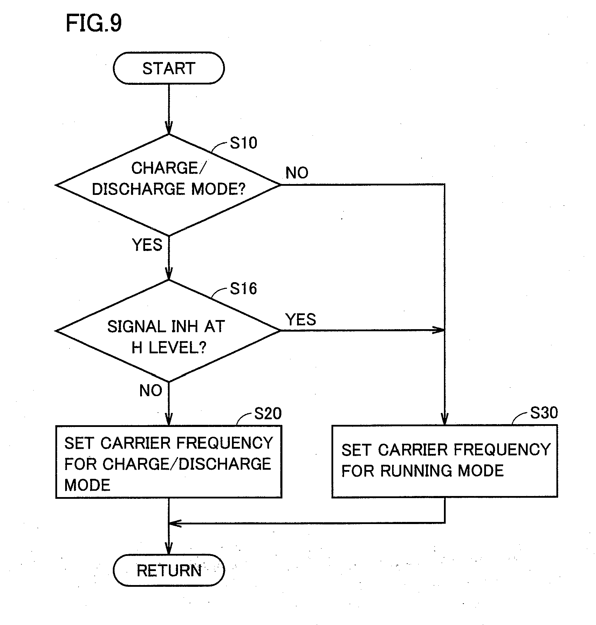

Fig. 9 is a flowchart for setting the carrier frequency in accordance with Modification 3 of Embodiment 1. Referring to Fig. 9, the flowchart includes, in addition to the flowchart of Fig.4, a step S16. Specifically, if it is determined at step S10 that the operation is in the charge/discharge mode, carrier signal generating unit 38 determines whether the signal INH from AC switch 50A is at the H level or not (step S16).

If it is determined that the signal INH is at L (logic low) level (NO at step S16), control proceeds to step S20 at which carrier signal generating unit 38 sets the carrier frequency of each of carrier signals FC1 and FC2 to the frequency fc for the charge/discharge mode.

If it is determined at step S16 that the signal INH is at H level (NO at step S16), control proceeds to step S30 at which carrier signal generating unit 38 sets the carrier frequencies of carrier signals FC1 and FC2 to frequencies fd1 and fd2 for the running mode, respectively.

As described above, in Embodiment 1 and each of its modifications, ECUs 30, 30A and 30B switch the carrier frequencies of inverters 10 and 20 from the frequencies fd1 and fd2 for the running mode to the frequency fc (> fd1, fd2) for the charge/discharge mode in the charge/discharge mode. Therefore, electromagnetic noise generated from inverters 10 and 20 can be reduced. Therefore, according to Embodiment 1 and its modifications, it is possible to reduce noise when electric power is supplied and received between commercial power supply 92 and power storage device B.

### [Embodiment 2]

In Embodiment 2, switching speed of power transistors Q11 to Q16 and Q21 to Q26 included in inverters 10 and 20 is reduced, in the charge/discharge mode. Consequently, surge voltage generated at the time of switching decreases, and hence, noise to commercial power supply 92 connected to connector 70 is reduced.

The overall configuration of hybrid vehicle in accordance with Embodiment 2 is the same as that of hybrid vehicle 100 in accordance with Embodiment 1 shown in Fig. 1.

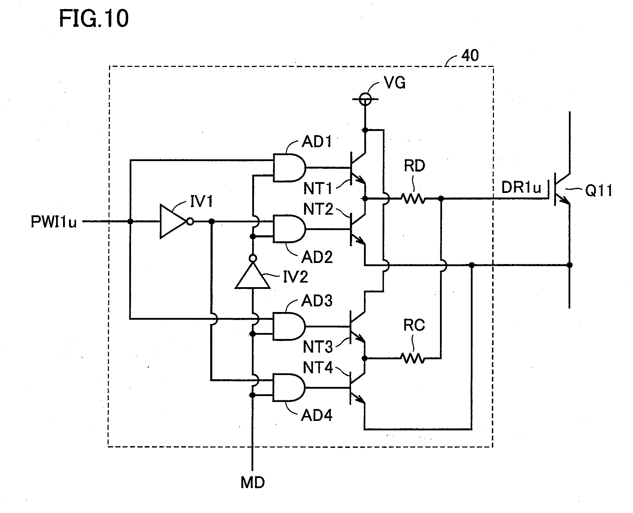

Fig. 10 is a circuit diagram of drive circuit 40 in accordance with Embodiment 2. In Fig. 10, a circuit for driving on/off the power transistor Q11 included in inverter 10 is shown as a representative. Similar circuit is provided for each of the power transistors Q12 to Q16 and Q21 to Q26 as well.

Referring to Fig. 10, drive circuit 40 includes inverting circuit IV 1 and IV2, AND gates AD1 to AD4, npn transistors NT1 to NT4, resistors RD and RC, and a power supply node VG.

Inverting circuit IV1 inverts the signal PWI1u from ECU 30 (not shown, same in the following) and outputs the result to AND gates AD2 and AD4. The signal PWI1u represents a signal for driving U-phase arm 12 of inverter 10, of the signal PWI1. Inverting circuit IV2 receives the mode signal MD generated by coordination control unit 36 (not shown) of ECU 30, inverts the received mode signal MD, and outputs the result to AND gates AD1 and AD2.

AND gate AD1 performs an AND operation between the signal PWI1u and the output signal of inverting circuit IV2, and outputs the result of operation to the base of npn transistor NT1. AND gate AD2 performs an AND operation between output signals of inverting circuits IV1 and IV2, and outputs the result of operation to the base of npn transistor NT2. AND gate AD3 performs an AND operation between the signal PWI1u and mode signal MD, and outputs the result of operation to the base of npn transistor NT3. AND gate AD4 performs an AND operation between the output signal of inverting circuit IV1 and the mode signal MD, and outputs the result of operation to the base of npn transistor NT4.

Npn transistors NT1 and NT2 are connected in series between the power supply node VG and the emitter of power transistor Q11, and receive at their gates the output signals of AND gates AD1 and AD2, respectively. Npn transistors NT3 and NT4 are connected in series between power supply node VG and the emitter of power transistor Q11, and receive at their gates the output signals of and gates AD3 and AD4, respectively.

Resistor RD is connected between a connection node of npn transistors NT1 and NT2 and the gate of power transistor Q11. Resistor RC is connected between a connection node of npn transistors NT3 and NT4 and the gate of power transistor Q11. Here, resistor RC has a resistance value larger than that of resistor RD.

In drive circuit 40, when the mode signal MD is at the L level, that is, when the operation mode of inverters 10 and 20 is the running mode, AND gates AD3 and AD4 are inactivated while AND gates AD1 and AD2 are activated. Thus, npn transistors NT3 and NT4 are kept off, while npn transistors NT 1 and NT2 are turned on/off in accordance with the signal PWI1u. Therefore, in the running mode, resistor RD is used as the gate resistance of power transistor Q11.

On the other hand, if the mode signal MD is at the H level, that is, when the operation mode of inverters 10 and 20 is the charge/discharge mode, AND gates AD3 and AD4 are activated while AND gates AD1 and AD2 are inactivated. Consequently, npn transistors NT1 and NT2 are kept off, while npn transistors NT3 and NT4 are turned on/off in accordance with the signal PWI1u. Therefore, in the charge/discharge mode, resistor RC is used as the gate resistance of power transistor Q11.

Specifically, in drive circuit 40, in the charge/discharge mode, higher gate resistance is used than in the running mode. As a result, surge voltage generated with the on/off operation of each power transistor can be decreased, and noise to commercial power supply 92 supplying and receiving electric power to and from inverters 10 and 20 can be reduced.

When the gate resistance of a transistor is increased, switching loss of the transistor increases. In the charge/discharge mode, however, the current flowing through inverters 10 and 20 is an order of magnitude smaller than in the running mode and, hence, the increase in switching loss poses no problem.

As described above, in Embodiment 2, in the charge/discharge mode, the gate resistance of drive circuit 40 is switched from the resistor RD for the running mode to the resistor RC (> resistor RD) for the charge/discharge mode and, therefore, the surge voltage associated with the on/off operation of power transistors Q11 to Q16 and Q21 to Q26 decreases. Therefore, according to Embodiment 2, the noise to commercial power supply 92 can be reduced when electric power is supplied and received between commercial power supply 92 and power storage device B.

### [Embodiment 3]

Embodiment 3 shows a configuration in which power storage device B is charged from commercial power supply 92, using one motor generator.

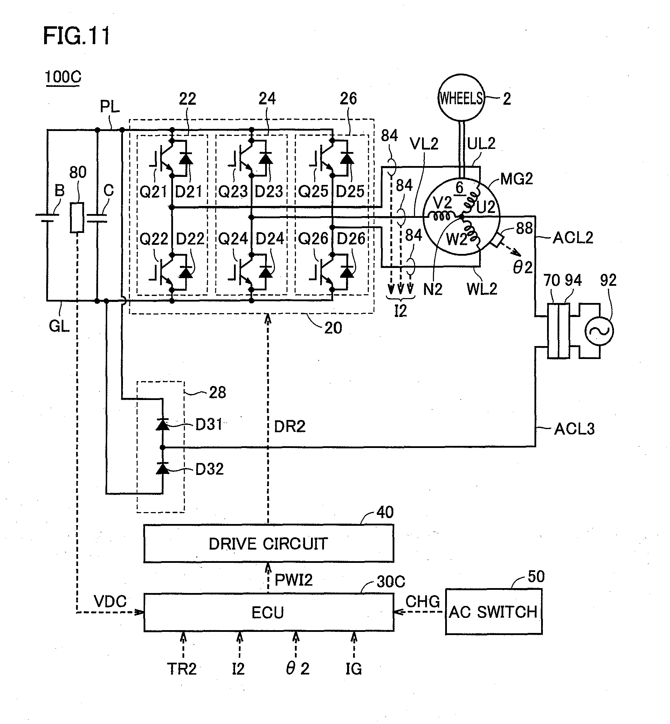

Fig. 11 is an overall block diagram of an electrically powered vehicle in accordance with Embodiment 3. Referring to Fig. 11, the electrically powered vehicle 100C includes power storage device B, inverter 20, motor generator MG2, wheels 2, an ECU 30C, drive circuit 40, and AC switch 50. Further, electrically powered vehicle 100C includes power line PL, ground line GL, capacitor C, U-phase line UL2, V-phase line VL2, W-phase line WL2, voltage sensor 80, current sensor 84, and rotation angle sensor 88.

Further, electrically powered vehicle 100C includes a rectifying circuit 28, power lines ACL2 and ACL3, and connector 70.

Rectifying circuit 28 includes diodes D31 and D32. Diode D31 has its cathode connected to power line PL and its anode connected to the cathode of diode D32. Diode D32 has its anode connected to the ground line GL. At a connection node between diodes D31 and D32, one end of power line ACL 3 is connected, and the other end of power line ACL3 is connected to connector 70.

ECU 30C generates a signal PWI2 for controlling inverter 20, and outputs the generated signal PWI2 to drive circuit 40.

When connector 94 of commercial power supply 92 is connected to connector 70 and charging of power storage device B from commercial power supply 92 is requested based on the charge request signal CHG from AC switch 50 (in charge/discharge mode), ECU 30C controls inverter 20 such that the AC power from commercial power supply 92 applied to neutral point N2 is converted to DC power for charging power storage device B.

At this time, ECU 30C sets the carrier frequency of carrier signal FC2 for generating the signal PWI2 to the frequency fc (>fd2) for the charge/discharge mode.

If the operation mode is not the charge/discharge mode (running mode), ECU 30C sets the carrier frequency of carrier signal FC2 to the frequency fd2 for the running mode.

Other configurations of electrically powered vehicle 100C are the same as those described with reference to Embodiment 1.

As described above, in Embodiment 3 also, in the charge/discharge mode, the carrier frequency of inverter 20 is switched from the frequency fd2 for the running mode to the frequency fc (> fd2) for the charge/discharge mode and, therefore, electromagnetic noise generated from inverter 20 is reduced. Therefore, by Embodiment 3 also, it is possible to reduce noise when power storage device B is charged from commercial power supply 92.

Though not specifically shown, as Modification 1 of Embodiment 3, similar to Modification 1 of Embodiment 1, the carrier frequency fc for the charge/discharge mode may be set only in the late night hours when the noise is particularly bothering.

Further, as Modification 2 of Embodiment 3, similar to Modification 2 of Embodiment 1, the noise around the vehicle may be detected by noise sensor 52 and the carrier frequency fc for the charge/discharge mode may be set only when the noise around the vehicle is low.

Further, as Modification 3 of Embodiment 3, similar to Modification 3 of Embodiment 1, it may be possible to allow the user to select in the charge/discharge mode whether the carrier frequency is to be switched from the frequency for the running mode to the frequency for the charge/discharge mode.

As a still another embodiment, in the configuration (Fig. 11) allowing charging of power storage device B from commercial power supply 92 using one motor generator, similar to Embodiment 2 described above, drive circuit 40 may be formed by the circuit shown in Fig. 10 and switching speed of power transistors Q21 to Q26 included in inverter 20 may be decreased in the charging mode. This reduces surge voltage generated with the switching of transistors and, as a result, noise to commercial power supply 92 connected to connector 70 can be reduced.

In Embodiments 1 and 2 described above, it is assumed that commercial power supply 92 is connected to connector 70. It is also possible to connect an electric load in place of commercial power supply 92, and to supply electric power from the hybrid vehicle to the electric load.

In each of the above-described embodiments, a ground-fault interrupter may be provided between connector 70 and power lines ACL1 and ACL2 (in Embodiment 3, power lines ACL2 and ACL3). Further, a boosting converter boosting the voltage from power storage device B and supplying it to inverters 10 and 20 may be provided between power storage device B and inverters 10 and 20. A known chopper circuit, for example, may be used as the boosting converter.

Further, in Embodiments 1 and 2 described above, a so-called series/parallel type hybrid vehicle, in which the power of engine 4 is distributed to motor generator MG1 and wheels 2 using power split device 3 has been described. The present invention, however, is also applicable to a so-called series type hybrid vehicle, in which the power of engine 4 is used solely for power generation by motor generator MG1 and vehicle driving force is generated using only the motor generator MG2.

Further, the present invention is also applicable to an electric vehicle not provided with engine 4 and runs only on electric power, or to a fuel cell vehicle including a fuel cell as an additional power source.

In the foregoing, at least one of motor generators MG1 and MG2 corresponds to the "rotating electric machine" of the present invention, and at least one of inverters 10 and 20 corresponds to the "inverter device" of the present invention. Further, ECUs 30, 30A to 30C correspond to the "controller" of the present invention, and AC switch 50A corresponds to the "instruction input unit" of the present invention. Further, resistor RD corresponds to the "first gate resistance" of the present invention, and resistor RC corresponds to the "second gate resistance" of the present invention. Further, power lines ACL1 to ACL3 and connector 70 form the "connecting device" of the present invention.

Although the present invention has been described and illustrated in detail, it is clearly understood that the same is by way of illustration and example only and is not to be taken by way of limitation, the scope of the present invention being interpreted by the terms of the appended claims.

## Claims

1. An electrically powered vehicle, comprising:
a rotating electric machine;
an inverter device capable of driving said rotating electric machine;
a power storage device supplying/receiving electric power to/from said inverter device; and
a controller controlling said inverter device either in a first operation mode in which said rotating electric machine is driven to rotate, or in a second operation mode in which said inverter device is operated as a voltage converter supplying and receiving electric power between said power storage device and a power supply or an electric load outside the vehicle; wherein
in said second operation mode, said controller reduces prescribed noise generated from said inverter device than in said first operation mode, by changing either switching frequency or switching speed of a switching element included in said inverter device from that in the first operation mode.

2. The electrically powered vehicle according to claim 1, wherein
said prescribed noise is sound noise; and
in said second operation mode, said controller changes said carrier frequency in a direction closer to inaudible range than in said first operation mode.

3. The electrically powered vehicle according to claim 2, wherein
said controller sets said carrier frequency to a first frequency in said first operation mode, and sets said carrier frequency to a second frequency higher than said first frequency in said second operation mode.

4. The electrically powered vehicle according to claim 3, wherein
said second frequency is in inaudible range.

5. The electrically powered vehicle according to claim 2, wherein
in said second operation mode, said controller changes said carrier frequency only in a preset late night hours.

6. The electrically powered vehicle according to claim 2, further comprising
a noise sensor for detecting noise level around the vehicle; wherein
in said second operation mode, said controller changes said carrier frequency only when the noise level detected by said noise sensor is lower than a reference value.

7. The electrically powered vehicle according to claim 2, further comprising
an instruction input unit allowing a user to input instruction to inhibit change of said carrier frequency; wherein
said controller stops change of said carrier frequency when the change of said carrier frequency is inhibited by said instruction input unit.

8. The electrically powered vehicle according to claim 1, wherein
said prescribed noise is noise to said power supply or to said electric load caused by surge voltage generated in association with an on/off operation of said switching element; and
in said second operation mode, said controller lowers switching speed of said switching element than in said first operation mode.

9. The electrically powered vehicle according to claim 8, further comprising
a drive circuit driving said switching element in accordance with an instruction applied from said controller; wherein
said drive circuit includes
a first gate resistance used in the first operation mode, and
a second gate resistance used in the second operation mode, having a resistance value larger than said first gate resistance.

10. The electrically powered vehicle according to claim 1, wherein
said rotating electric machine includes a star-connected first poly-phase winding as a stator winding;
said electrically powered vehicle further comprising:
another rotating electric machine including a star-connected second poly-phase winding as a stator winding; and
a connecting device configured to allow electric power supply and reception between a first neutral point of said first poly-phase winding, a second neutral point of said second poly-phase winding and said power supply or said electric load; wherein
said inverter device includes
a first inverter capable of driving said rotating electric machine, and
a second inverter capable of driving said another rotating electric machine; and
said controller controls said first and second inverters such that in said second operation mode, electric power is supplied and received between said power storage device and said power supply or said electric load connected to said first and second neutral points by said connecting device.

11. The electrically powered vehicle according to claim 10, wherein
when said power storage device is charged from said power supply in said second operation mode, said controller boosts a voltage supplied from said power supply by using said first and second poly-phase windings as reactors and controlling said first and second inverters such that said first and second inverters operate as legs of said voltage converter.
